(19) Europäisches Patentamt
European Patent Office
Office européen des brevets

(11) **EP 2 749 857 B1**

(12) **EUROPÄISCHE PATENTSCHRIFT**

(45) Veröffentlichungstag und Bekanntmachung des Hinweises auf die Patenterteilung:
**21.11.2018 Patentblatt 2018/47**

(21) Anmeldenummer: **13192814.5**

(22) Anmeldetag: **14.11.2013**

(51) Int Cl.:
*G01L 11/00* (2006.01)     *G01L 13/00* (2006.01)
*G01L 9/00* (2006.01)     *G01L 19/02* (2006.01)
*G01L 27/00* (2006.01)

(54) **Vorrichtung zur Messung eines Druckes mit wenigstens einem Drucksensor mit wenigstens einer aktiven Sensorfläche**

Device for measuring a pressure with at least one pressure sensor with at least one active sensor surface

Dispositif de mesure d'une pression à l'aide d'au moins un capteur de pression ayant au moins une surface de capteur active

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.12.2012 DE 102012112862**

(43) Veröffentlichungstag der Anmeldung:
**02.07.2014 Patentblatt 2014/27**

(73) Patentinhaber: **Pfeiffer Vacuum GmbH 35614 Aßlar (DE)**

(72) Erfinder: **Conrad, Armin 35745 Herborn (DE)**

(74) Vertreter: **Knefel, Cordula Wertherstrasse 16 35578 Wetzlar (DE)**

(56) Entgegenhaltungen:
**EP-A1- 0 524 381        EP-A2- 2 700 928
DE-A1- 2 236 907        GB-A- 2 470 714
US-A1- 2010 192 694**

EP 2 749 857 B1

**Beschreibung**

Die Erfindung betrifft eine Vorrichtung zur Messung eines Druckes mit wenigstens einem Drucksensor mit wenigstens einer aktiven Sensorfläche.

Aus der Praxis sind verschiedene Drucksensoren bekannt, die beispielsweise als Membransensor, piezoelektrischer Sensor, Elektret, piezoresistiver Sensor oder als Pirani-Sensor ausgebildet sind.

Diese aus der Praxis bekannten Sensoren weisen den Nachteil auf, dass sie häufig eine große thermische und zeitliche Drift aufweisen, das heißt thermisch oder altersbedingt tritt eine Nullpunktsdrift auf. Teilweise wird mit diesen Sensoren auch nicht die erforderliche Auflösung erreicht.

Zum Stand der Technik (EP 0 524 381 A1) gehört eine Sensorvorrichtung, die ein mechanisch schwingfähiges Element als Sensorfläche aufweist. Das mechanisch schwingfähige Element ist im Streufeld einer Spule derart angeordnet, dass das magnetische Wechselfeld der Spule das Element in seiner Längsachse zu Biegeschwingungen anregt. Diese Vorrichtung ist relativ aufwändig.

Weiterhin gehört zum Stand der Technik (GB 2 470 714 A) ein Drucksensor mit einem Silikonkern. Der Sensor weist eine Membran auf, die in einem Hohlkörper angeordnet ist. Bei dieser Art Sensor tritt häufig eine große thermische und zeitliche Drift auf.

Weiterhin gehört zum Stand der Technik (DE 22 36 907 A1) ein Gasdrucksensor, der zwei Membranen aufweist. Die Membranen sind mit einem elektrodynamischen Transducer verbunden, der aus Ankern aus Weicheisen besteht und Permanentmagneten, die mit dem Anker fest verbunden sind, sowie einer feststehenden Zwischenspule. Auch dieser Sensor weist den Nachteil auf, dass eine thermische und altersbedingte Nullpunktsdrift auftritt.

Darüber hinaus gehört zum Stand der Technik (EP 2 700 928 A1) ein Drucksensor, der eine Membran aufweist, die eine Kammer abdeckt. Die Membran ist als offenliegende Membran relativ ungeschützt, wodurch der Sensor störanfällig wird.

Das der Erfindung zugrunde liegende technische Problem besteht darin, eine Vorrichtung zur Messung eines Druckes mit wenigstens einem Drucksensor mit wenigstens einer aktiven Sensorfläche, insbesondere im Einsatzgebiet der Vakuumdrucksensoren anzugeben, bei der eine Nullpunktsdrift deutlich reduziert wird oder überhaupt nicht auftritt, die eine hohe Auflösung aufweist und darüber hinaus kostengünstig aufgebaut ist.

Dieses technische Problem wird durch eine Vorrichtung mit den Merkmalen gemäß Anspruch 1 gelöst.

Die erfindungsgemäße Vorrichtung zur Messung eines Druckes mit wenigstens einem Drucksensor mit wenigstens einer aktiven Sensorfläche, wobei der wenigstens einen Sensorfläche gegenüberliegend eine schwingende und/oder temperaturwechselnde Gegenfläche angeordnet ist, wobei die Sensorfläche und die Gegenfläche in einem Hohlkörper angeordnet oder Teil eines Hohlkörpers sind, wobei der Hohlkörper wenigstens eine Öffnung aufweist, und wobei wenigstens ein Wechselsignalverstärker vorgesehen ist, zeichnet sich dadurch aus, dass zwischen der Gegenfläche und der Sensorfläche Seitenwände vorgesehen sind, die zusammen mit der Sensorfläche und der Gegenfläche den Hohlkörper bilden, und dass die Gegenfläche oder die Sensorfläche innenliegender Teil eines die korrespondierende Fläche wenigstens teilweise umgreifenden Hohlzylinders ist, dass der Hohlzylinder an seinen Stirnseiten bis auf Öffnungen geschlossen ausgebildet ist und ein Volumen einschließt.

Die erfindungsgemäße Vorrichtung zur Messung eines Druckes mit wenigstens einem Drucksensor mit wenigstens einer aktiven Sensorfläche ist vorteilhaft derart ausgebildet, dass der wenigstens einen Sensorfläche gegenüberliegend eine schwingende und/oder temperaturwechselnde Gegenfläche angeordnet ist, dass zwischen der Gegenfläche und der Sensorfläche Seitenwände vorgesehen sind, die zusammen mit der Sensorfläche und der Gegenfläche einen Hohlkörper bilden, wobei der Hohlkörper wenigstens eine Öffnung aufweist und dass wenigstens ein Wechselsignalverstärker vorgesehen ist.

Eine andere vorteilhafte Ausführungsform der erfindungsgemäßen Vorrichtung zur Messung eines Druckes mit wenigstens einem Drucksensor mit wenigstens einer aktiven Sensorfläche sieht vor, dass der wenigstens einen Sensorfläche gegenüberliegend eine schwingende und/oder temperaturwechselnde Gegenfläche angeordnet ist und dass die Gegenfläche oder die Sensorfläche innenliegender Teil eines die korrespondierende Fläche wenigstens teilweise umgreifenden Hohlzylinders ist, dass der Hohlzylinder an seinen Stirnseiten bis auf Öffnungen geschlossen ausgebildet ist und ein Volumen einschließt und dass wenigstens ein Wechselsignalverstärker vorgehen ist.

Die erfindungsgemäßen Vorrichtungen weisen den Vorteil auf, dass sie auf Druckwechsel reagierende Drucksensoren mit deswegen geringerer thermischer und zeitlicher Drift aufweisen. Es können prinzipiell sämtliche bekannten Messprinzipien verwendet werden, vorteilhaft solche mit geringer thermischer Drift der Drucksteilheit dp/dT (T). Die Offsetdrift ist prinzipiell unterdrückt.

Gemäß der Erfindung ist vorgesehen, dass entweder die Druckschwankung durch ein fluktuierendes Volumen vor der aktiven Sensorfläche erzeugt wird oder durch eine fluktuierende Temperatur einer Heißfläche vor der aktiven Sensorfläche.

Die erfindungsgemäßen Vorrichtungen weisen den Vorteil auf, dass die Gegenfläche sich entweder periodisch schwingend gegenüber der Sensorfläche bewegt oder die Gegenfläche periodisch geheizt wird, zum Beispiel durch Metallisierung auf Keramik und ohmscher Heizung mit Wechselstrom oder Gleichstrom (DC) mit überlagertem Wechselstrom, so dass die von der Gegenfläche kommenden und auf die Sensorfläche auftreffenden Moleküle dort als Kraftwirkung beziehungsweise als Wärme transportierend registriert werden und ein druckproportionales Signal erzeugen.

Die zentralen Bauteile der erfindungsgemäßen Vorrichtungen sind ein Drucksensor, eine der aktiven Sensorfläche gegenüberstehende Gegenfläche, die vorteilhaft mit Seitenwänden zur Sensorfläche ein Volumen einschließt. Es können auch an der Sensorfläche Seitenflächen angeordnet sein, die in Richtung der Gegenfläche ausgerichtet sind und das Volumen einschließen. Die Gegenfläche kann auch die Sensorfläche in zwei Dimensionen komplett umschließen, indem die Gegenfläche zum Beispiel Teil eines Hohlkörpers, beispielsweise eines konzentrischen Zylinders ist. Es ist auch möglich, dass die Sensorfläche Teil eines Hohlkörpers, beispielsweise eines konzentrischen Zylinders ist, der die Gegenfläche komplett umschließt. Weiterer Bestandteil der Vorrichtung ist ein Wechselsignalverstärker. Der Wechselsignalverstärker kann vorteilhaft als frequenzselektiver Wechselsignalverstärker ausgebildet sein. Bei diesem frequenzselektiven Wechselsignalverstärker ist die Mittelfrequenz auf die Grundfrequenz des anregenden Druckwechselsignales eingestellt. Die Verstärkung ist vorteilhaft so eingestellt oder auch automatisch einstellbar, dass die Signalpegel in dem für die Analog-Digital-Konversion (A/D-Konversion) erforderlichen Bereich liegen.

Darüber hinaus ist vorteilhaft eine Auswertesoftware vorgesehen, die bestmöglich nach dem Stand der Technik den Spitzenwert und/oder Effektivwert des Wechselsignales erfasst und darstellt. Bei kleinsten Signalen kann die Auflösung (minimaler Druckwert) zu Ungunsten der Ansprechgeschwindigkeit (lange, jedoch noch zumutbare Zeit zur Mittelwertbildung) verändert werden.

Die erfindungsgemäßen Vorrichtungen können vorteilhaft prinzipiell mit allen Drucksensoren aufgebaut werden. Ein vorteilhaftes Einsatzgebiet sind Vakuumdrucksensoren. Im Falle einer thermischen Druckfluktuationserzeugung entfallen die auf Ionisation basierenden Sensoren. Bei Pirani-Sensoren sollte die thermische Zeitkonstante möglichst klein sein. Ideal ist sie nicht sehr viel größer als die Wechselperiodendauer.

Gemäß einer besonders bevorzugten Ausführungsform der Erfindung sind zwischen der Gegenfläche und der Sensorfläche Öffnungen vorgesehen, die vorteilhaft als Spalte ausgebildet sind. Die Gegenfläche ist vorteilhaft als eine frei gegenüber der Sensorfläche bewegbare Fläche ausgebildet.

Weitere Merkmale und Vorteile der Erfindung ergeben sich anhand der zugehörigen Zeichnung, in der mehrere Ausführungsbeispiele einer erfindungsgemäßen Vorrichtung nur beispielhaft dargestellt sind. In der Zeichnung zeigen:

Fig. 1    eine Vorrichtung mit Druckwechsel durch fluktuierende Temperatur;

Fig. 2    eine Vorrichtung mit Druckwechsel durch fluktuierendes Volumen;

Fig. 3    eine Darstellung der Signalverarbeitung.

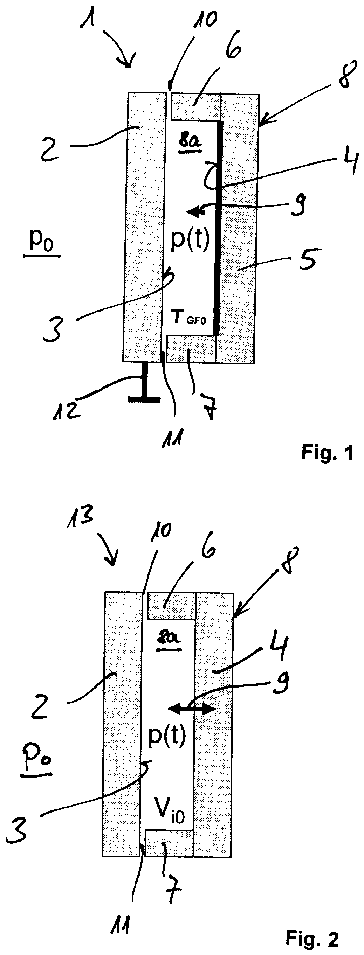

Fig. 1 zeigt eine Vorrichtung 1 mit einem Drucksensor 2, der eine aktive Sensorfläche 3 aufweist. Der aktiven Sensorfläche 3 gegenüberliegend ist eine temperaturwechselnde Gegenfläche 4 angeordnet. An einem Träger 5 der temperaturwechselnden Gegenfläche 4 sind Seitenwände 6, 7 angeordnet, die zusammen mit der temperaturwechselnden Gegenfläche 4 und der aktiven Sensorfläche 3 einen Hohlkörper 8 bilden, der ein Volumen 8a einschließt. Außerhalb des Volumens 8a herrscht ein Druck $p_0$. Innerhalb des Volumens 8a ist der Druck $p(t)$ vorhanden, das heißt ein zeitlich sich ändernder Druck.

Über Spalte 10, 11 ist ein Druckausgleich über einen Spaltleitwert der Spalte 10, 11 möglich. Die Spalte 10, 11 werden so gewählt, dass ein langsamer Druckausgleich erfolgt. Mit 12 ist eine Temperatursenke für einen Wärmestrom bei "hohem" Druck bezeichnet.

Der Druck $p(t)$ kann wie folgt beschrieben werden: Die Gegenfläche 4 wird periodisch geheizt (zum Beispiel Metallisierung auf Keramik und ohmsche Heizung mit Wechselstrom oder Gleichstrom (DC) mit überlagertem Wechselstrom), so dass die von der Gegenfläche 4 kommenden und auf der Sensorfläche 3 auftreffenden Moleküle als Kraft in Richtung des Pfeiles 9 wirken, beziehungsweise als Wärme transportierend registriert werden und ein druckproportionales Signal entsprechend der folgenden Gleichung erzeugen:

$$p(t) = p_0 + p_w(t) \qquad \text{(Gleichung 1)}$$

$$p_w(t) = p_0 \cdot dT_{GF}(t)/T_{GF0} \qquad \text{(Gleichung 2)}$$

wobei: $p_0$ = Rezipientendruck

$T_{GF0}$ = Temperatur der Gegenfläche

Das Sensorsignal sieht dann folgendermaßen aus:

$$U_s = U_0 + U_w(t)$$
$$= k_p \cdot p + U_{off} \qquad \text{(Gleichung 3)}$$

Fig. 2 zeigt eine Vorrichtung 13, bei der ein Druckwechsel durch ein fluktuierendes Volumen erzeugt wird.

Die Vorrichtung 13 weist einen Drucksensor 2 mit einer aktiven Sensorfläche 3 auf. Gegenüberliegend ist eine schwingende Gegenfläche 4 angeordnet. Seitenwände 6, 7 bilden mit der aktiven Sensorfläche 3 und der schwingenden Gegenfläche 4 ein Volumen 8a. Die Gegenfläche 4 schwingt in Richtung des Doppelpfeiles 9. Über die Spalte 10, 11 ist ein langsamer Druckausgleich möglich. Die Druckausgleichszeitkonstante ist deutlich größer als die Wechselperiodendauer.

Außerhalb des Volumens 8a herrscht ein Druck $p_0$ vor. Dies kann der Rezipientendruck $p_0$ einer Vakuumkammer sein.

Der Sensordruck bestimmt sich hier folgendermaßen:

$$p(t) = p_0 + p_w(t) \qquad \text{(Gleichung 4)}$$

$$p_w(t) = -p_0 \cdot dV_i(t)/V_{i0} \qquad \text{(Gleichung 5)}$$

wobei: $p_0$ = Rezipientendruck
$V_{i0}$ = Sensorinnenvolumen

Das Sensorsignal bestimmt sich dann folgendermaßen:

$$U_s = U_0 + U_w(t)$$
$$= k_p \cdot p + U_{off} \qquad \text{(Gleichung 6)}$$

Die Funktionen lassen sich gemäß Fig. 2 wie folgt beschreiben: Die Gegenfläche 4 bewegt sich periodisch schwingend gegenüber der aktiven Sensorfläche 3, so dass der Druck entsprechend folgt (zum Beispiel Elektromagnet oder Piezo):

$$p(t) = p_0 + p_w(t) = p_0 + p_0 \cdot s(t) \qquad \text{(Gleichung 7)}$$

Gemäß der Fig. 1 wird die Gegenfläche 3 periodisch geheizt (zum Beispiel Metallisierung auf Keramik und ohmsche Heizung mit Wechselstrom oder DC mit überlagertem Wechselstrom), so dass die von der Gegenfläche 4 kommenden und auf die Sensorfläche 3 auftreffenden Moleküle dort als Kraftwirkung in Richtung des Pfeiles 9 beziehungsweise als Wärme transportierend registriert werden und ein druckproportionales Signal entsprechend Gleichung 9 erzeugen.

Der Wechselanteil $U_w(t)$ des druckproportionalen Signals

$$U(t) = U_0 + U_w(t) = k_p \cdot p(t) + U_{off} \qquad \text{(Gleichung 8)}$$

wird nun, wie oben beschrieben, selektiv verstärkt (v), A/Dgewandelt, digital ausgewertet und ausgegeben.

Es ergibt sich nun aus den Gleichungen 7 und 8

$$p_0 = U_w/k_p/s/V \qquad \text{(Gleichung 9)}$$

wobei nun mit $U_w$ und s die Effektivwerte gemeint sind. Bei Volumenfluktuation ist s die relative Volumenänderung

$$s = -dV/V \qquad \text{(Gleichung 10)}$$

und bei Temperaturfluktuation die relative Temperaturänderung

$$s = dT/T \qquad \text{(Gleichung 11)}$$

der Heißfläche gemeint.

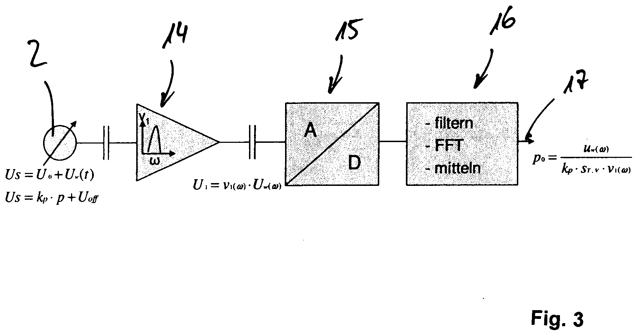

Fig. 3 zeigt eine Signalverarbeitung. Von dem Drucksensor 2 wird ein Signal zu einer frequenzselektiven Analogverstärkung 14 weitergeleitet. Anschließend wird das Signal einem Analog-Digital-Konverter (A/D-Wandler) 15 zugeleitet. Anschließend erfolgt eine Auswertung in einer Berechnungseinheit 16 und zum Abschluss die Ausgabe 17.

Das Fourierspektrum des selektiv verstärkten Sensorsignales (Effektivwerte) sieht folgendermaßen aus:

$$U_W(\omega) = \sum_{i=1}^{\infty} u_w \ (i\omega)$$

$$\text{(Gleichung 12)}$$

Die Messergebnisse des statischen Druckes sehen folgendermaßen aus:

$$p_0 = \frac{\bar{u}_w(\omega)}{k_p \cdot S_{T,V} \cdot v_1(\omega)} \qquad \text{(Gleichung 13)}$$

Bei periodischem Druckwechsel gilt die allgemeine Gasgleichung

$$p = \frac{N}{V} kT \qquad \text{(Gleichung 14)}$$

mit N = Teilchenzahl
V = Volumen
T = Temperatur
$p_0$ = statischer Rezipientendruck

Der Druckwechsel durch Temperatur und/oder Volumenwechsel lässt sich folgendermaßen darstellen:

$$p(t) = p_0 + p_0 \frac{dT_{GF}(t)}{T_{GF0}} - p_0 \frac{dVi(t)}{V_{i0}} = p_0 \cdot (1 + s_T - s_V)$$

$$\text{(Gleichung 15)}$$

Die periodischen möglichst sinusförmigen Wechsel mit $\omega$ sind

$$\frac{dT_{GF}(t)}{T_{GF0}} = \sum_{i=1}^{\infty} a_i \cdot \sin(i\omega t + \gamma_i)$$

$$\text{(Gleichung 16)}$$

$$\frac{dV_i(t)}{V_{i0}} = \sum_{i=1}^{\infty} b_i \cdot \sin(i\omega t + \varphi_i)$$

(Gleichung 17)

Wegen der Einschränkung auf Signalwechsel entfällt der Sensorfehler bedingt durch die Nullpunktsdrift ($U_{off}$) thermisch oder alterungsbedingt. Lediglich die durch prinzipielle Nichtlinearität des jeweiligen Sensors 2 bedingte Drift der Steilheit wirkt sich noch fehlerhaft aus, wobei der thermisch bedingte Anteil nach gängigen Methoden kompensiert werden kann.

Weiterer Vorteil der Erfindung ist, dass wegen des Überganges von DC-Kopplung auf AC-Kopplung in der Verstärkerkette die Offsetdrift entfällt und die naturgemäß sehr kleine verbleibende Nichtlinearität der Verstärker gegen die des Sensors vernachlässigt werden kann.

Die erfindungsgemäße Vorrichtung weist darüber hinaus den Vorteil einer höheren Auflösung mit bekannter Sensorik oder gleiche oder verbesserte Auflösung mit geringerem Thermostatisierungs- und Temperaturkompensationsaufwand auf.

Darüber hinaus ist eine kompaktere und auch günstigere Bauweise möglich.

Bezugszahlen

| 1 | Vorrichtung |
|---|---|
| 2 | Drucksensor |
| 3 | aktive Sensorfläche |
| 4 | temperaturwechselnde oder schwingende Gegenfläche |
| 5 | Träger des Sensors |
| 6 | Seitenwand |
| 7 | Seitenwand |
| 8 | Hohlkörper |
| 8a | Volumen |
| 9 | Pfeil/Doppelpfeil |
| 10 | Spalt |
| 11 | Spalt |
| 12 | Temperatursenke |
| 13 | Vorrichtung |
| 14 | frequenzselektive Analogverstärkung |
| 15 | AD-Konverter |
| 16 | Berechnungseinheit |
| 17 | Ausgabe |

**Patentansprüche**

1.   Vorrichtung zur Messung eines Druckes mit wenigstens einem Drucksensor mit wenigstens einer aktiven Sensorfläche, wobei der wenigstens einen Sensorfläche (3) gegenüberliegend eine periodisch schwingende und/oder periodisch temperaturwechselnde Gegenfläche (4) angeordnet ist, dass die Sensorfläche (3) und die Gegenfläche (4) in einem Hohlkörper (8) angeordnet oder Teil eines Hohlkörpers (8) sind, wobei der Hohlkörper (8) wenigstens eine Öffnung (10, 11) aufweist, und dass wenigstens ein Wechselsignalverstärker (14) zur Verstärkung eines Signals des wenigstens einen Drucksensors vorgesehen ist, **dadurch gekennzeichnet, dass** zwischen der Gegenfläche (4) und der Sensorfläche (3) Seitenwände (6, 7) vorgesehen sind, die zusammen mit der Sensorfläche (3) und der Gegenfläche (4) den Hohlkörper (8) bilden, und dass die Gegenfläche (4) oder die Sensorfläche (3) innenliegender Teil eines die korrespondierende Fläche wenigstens teilweise umgreifenden Hohlzylinders ist, dass der Hohlzylinder an seinen Stirnseiten bis auf Öffnungen geschlossen ausgebildet ist und ein Volumen einschließt.

2.   Vorrichtung nach einem der vorhergehenden Ansprüche, **dadurch gekennzeichnet, dass** die Öffnungen (10, 11) als Spalte ausgebildet sind.

3. Vorrichtung nach einem der vorhergehenden Ansprüche, **dadurch gekennzeichnet, dass** die Gegenfläche (4) als eine frei gegenüber der Sensorfläche (3) bewegbare Fläche ausgebildet ist.

4. Vorrichtung nach einem der vorhergehenden Ansprüche, **dadurch gekennzeichnet, dass** eine Auswertesoftware vorgesehen ist.

5. Vorrichtung nach einem der vorhergehenden Ansprüche, **dadurch gekennzeichnet, dass** der Drucksensor (2) als ein auf Druckwechsel reagierender Drucksensor ausgebildet ist.

6. Vorrichtung nach einem der vorhergehenden Ansprüche, **dadurch gekennzeichnet, dass** der Drucksensor (2) als Membransensor, piezoelektrischer Sensor, Elektret, piezoresistiver Sensor oder als Pirani-Sensor ausgebildet ist.

7. Vorrichtung nach einem der vorhergehenden Ansprüche, **dadurch gekennzeichnet, dass** der Wechselsignalverstärker (14) als frequenzselektiver Wechselsignalverstärker (14) ausgebildet ist.

## Claims

1. A device for measuring a pressure with at least one pressure sensor with at least one active sensor surface, wherein the at least one sensor surface (3) is arranged opposite a periodically oscillating and/or periodically temperature-changing counter-surface (4), in that the sensor surface (3) and the counter-surface (4) are arranged in a hollow body (8) or part of a hollow body (8), wherein the hollow body (8) has at least one opening (10, 11), and in that there is provided at least one alternating signal amplifier (14) for amplifying a signal of the at least one pressure sensor, **characterised in that** between the counter-surface (4) and the sensor surface (3) there are provided side walls (6,7), which together with the sensor surface (3) and the counter-surface (4) form the hollow body (8), and **in that** the counter-surface (4) or the sensor surface (3) is the inner part of a hollow cylinder at least partly surrounding the corresponding surface, **in that** the hollow cylinder is formed closed at its ends up to openings and encloses a volume.

2. A device according to one of the preceding claims, **characterised in that** the openings (10, 11) are formed as gaps.

3. A device according to one of the preceding claims, **characterised in that** the counter-surface (4) is formed as a surface which is freely movable relative to the sensor surface (3).

4. A device according to one of the preceding claims, **characterised in that** evaluating software is provided.

5. A device according to one of the preceding claims, **characterised in that** the pressure sensor (2) is formed as a sensor reacting to pressure change.

6. A device according to one of the preceding claims, **characterised in that** the pressure sensor (2) is formed as a membrane sensor, a piezoelectric sensor, an electret, a piezoresistive sensor or as a Pirani sensor.

7. A device according to one of the preceding claims, **characterised in that** the alternating signal amplifier (14) is formed as a frequency-selective alternating signal amplifier (14).

## Revendications

1. Dispositif, destiné à mesurer une pression, à l'aide d'au moins un capteur de pression pourvu d'au moins une surface active de capteur, en regard de l'au moins une surface de capteur (3) étant placée une surface antagoniste (4) périodiquement oscillante et/ou à température périodiquement variable, la surface de capteur (3) et la surface antagoniste (4) étant placées dans un corps creux (8) ou étant une partie d'un corps creux (8), le corps creux (8) comportant au moins un orifice (10, 11), et au moins un amplificateur de signal alternatif (14) étant prévu, pour amplifier un signal de l'au moins un capteur de pression, **caractérisé en ce qu'**entre la surface antagoniste (4) et la surface de capteur (3) des parois latérales (6, 7) sont prévues, qui forment avec la surface de capteur (3) et la surface antagoniste (4) le corps creux (8), et **en ce que** la surface antagoniste (4) ou la surface de capteur (3) est une partie interne d'un cylindre creux entourant au moins partiellement la surface correspondante, et **en ce qu'**à part des orifices, le cylindre creux est conçu en étant fermé sur ses faces frontales et englobe un volume.

**2.** Dispositif selon l'une quelconque des revendications précédentes, **caractérisé en ce que** les orifices (10, 11) sont conçus sous la forme de fentes.

**3.** Dispositif selon l'une quelconque des revendications précédentes, **caractérisé en ce que** la surface antagoniste (4) est conçue sous la forme d'une surface librement mobile au regard de la surface de capteur (3).

**4.** Dispositif selon l'une quelconque des revendications précédentes, **caractérisé en ce qu'**il comprend un logiciel d'évaluation.

**5.** Dispositif selon l'une quelconque des revendications précédentes, **caractérisé en ce que** le capteur de pression (2) est conçu sous la forme d'un capteur de pression réagissant à un changement de pression.

**6.** Dispositif selon l'une quelconque des revendications précédentes, **caractérisé en ce que** le capteur de pression (2) est conçu sous la forme d'un capteur à membrane, d'un capteur piézoélectrique, d'un électret, d'un capteur piézorésistif ou d'un capteur de Pirani.

**7.** Dispositif selon l'une quelconque des revendications précédentes, **caractérisé en ce que** l'amplificateur de signal alternatif (14) est conçu sous la forme d'un amplificateur de signal alternatif (14) à sélection de fréquence.

Fig. 1

Fig. 2

**Fig. 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0524381 A1
- GB 2470714 A
- DE 2236907 A1
- EP 2700928 A1